# EUROPEAN PATENT APPLICATION

(11) **EP 4 424 746 A1**
(43) Date of publication of application: **04.09.2024**
(21) Application number: 22884765.3
(22) Date of filing: 20.10.2022
(51) Int. Cl.: C08G 69/02, C08G 69/36, D01F 6/80

(54) **POLYAMIDE POLYMER**

(30) Priority: 28.10.2021 JP 2021176612
(71) Applicant: Grips Co., Ltd., Kumamoto-shi Kumamoto, 861-8030 (JP)
(72) Inventor: KANEKO Tatsuo, Nomi-shi Ishikawa 923-1292 (JP); WANG Huaiyu, Nomi-shi Ishikawa 923-1292 (JP); SINGH Maninder, Nomi-shi Ishikawa 923-1292 (JP)
(74) Representative: Henkel & Partner mbB
(86) International application number: PCT/JP2022/039171
(87) International publication number: WO 2023/074535

(57) **Abstract**

A polyamide polymer of a dicarboxylic acid, a diamine, and an aminoalkylcarboxylic acid, said polyamide polymer characterized in that itaconic acid is used as the dicarboxylic acid, a diamine represented by formula (I) is used as the diamine (formula (I): H₂N-R¹-NH₂, wherein R¹ represents an alkylene group having 4-12 carbon atoms), and an aminoalkylcarboxylic acid represented by formula (II) is used as the aminoalkylcarboxylic acid (formula (II): HOOC-R²-NH₂, wherein R² represents an alkylene group having 8-12 carbon atoms).

## Description

### TECHNICAL FIELD

The present invention relates to a polyamide-based polymer. More specifically, the present invention relates to a polyamide-based polymer which is expected to be used in place of conventional nylon (product name, hereinafter referred to the same).

### BACKGROUND ART

A polyamide represented by nylon has been widely used in not only fibers but also automobiles parts around an engine, such as an intake manifold, since the polyamide is excellent in properties such as heat resistance and oil resistance. Also, nylon has been used in fishing gears such as a fishing net and a fishing line because nylon has high mechanical strength such as tensile strength.

Nowadays, marine pollution caused by plastic garbage has become an international issue because the plastic garbage such as nylon has poor degradability in nature, and floats in the ocean without being broken down. As a result, it has become a problem that fish ingest the plastic garbage, and seabirds get nylon fishing lines entangled in their wings and legs.

In recent years, as a polyamide having a high glass transition temperature and properties as an engineering plastic, there has been proposed a polyamide made by carrying out a reaction of itaconic acid with an aliphatic dialkylene diamine having 2 to 6 methylene groups or an aromatic diamine such as diamino diphenyl ether or xylylenediamine, and carrying out dehydration condensation of the resulting product (see, for example, paragraph [0016] and working examples of Patent Literature 1). The polyamide however has drawbacks such that the polyamide is poor in extensibility and toughness.

Accordingly, development of a plastic having degradability in water, extensibility and toughness, which can be substituted for nylon, has been urgently desired.

### PRIOR ART LITERATURES

### PATENT LITERATURES

Patent Literature 1: Japanese Patent No. 5777134

### SUMMARY OF THE INVENTION

### PROBLEMS TO BE SOLVED BY THE INVENTION

The present invention has been made in view of the above-mentioned prior art. An object of the present invention is to provide a polyamide-based polymer, in which itaconic acid available as a bio-based monomer is used as a raw material of the polyamide-based polymer, which has degradability in water, extensibility and toughness, and which can be substituted for nylon, and a method for producing the same; a polyamide-based fiber including the polyamide-based polymer; and a molding material including the polyamide-based polymer.

### MEANS FOR SOLVING THE PROBLEMS

The present invention relates to:
(1) a polyamide-based polymer of a dicarboxylic acid, a diamine and an aminoalkylcarboxylic acid, wherein itaconic acid is used as the dicarboxylic acid; a diamine represented by formula (I):

   H₂N-R¹-NH₂ (I)

   wherein R¹ is an alkylene group having 4 to 12 carbon atoms,
   is used as the diamine; and an aminoalkylcarboxylic acid represented by formula (II):

      HOOC-R²-NH₂ (II)

      wherein R² is an alkylene group having 8 to 12 carbon atoms,
      is used as the aminoalkylcarboxylic acid;
(2) a method for producing the polyamide-based polymer of a dicarboxylic acid, a diamine and an aminoalkylcarboxylic acid, which includes using itaconic acid as the dicarboxylic acid, a diamine represented by formula (I):

   H₂N-R¹-NH₂ (I)

   wherein R¹ is an alkylene group having 4 to 12 carbon atoms,
   as the diamine, and an aminoalkylcarboxylic acid represented by formula (II):

      HOOC-R²-NH₂ (II)

      wherein R² is an alkylene group having 8 to 12 carbon atoms,
      as the aminoalkylcarboxylic acid;
      carrying out a reaction of itaconic acid with the diamine represented by formula (I) and the aminoalkylcarboxylic acid represented by formula (II); and
      carrying out a polymerization of the resulting reaction product;
(3) a polyamide-based fiber including the polyamide-based polymer described in the above item (1); and
(4) a molding material including the polyamide-based polymer described in the above item (1).

### EFFECT OF THE INVENTION

According to the present invention, there are provided a polyamide-based polymer, in which itaconic acid available as a bio-based monomer is used as a raw material of the polyamide-based polymer, which has degradability in water, extensibility and toughness, and which can be substituted for nylon, and a method for producing the same; a polyamide-based fiber including the polyamide-based polymer; and a molding material including the polyamide-based polymer.

### BRIEF DESCRIPTION OF THE DRAWINGS

Fig. 1 is a graph showing a nuclear magnetic resonance (¹H-NMR) spectrum of a polyamide-based polymer obtained in Example 1.
Fig. 2 is a graph showing an infrared absorption spectrum of the polyamide-based polymer obtained in Example 1.
Fig. 3 is a graph showing a nuclear magnetic resonance (¹H-NMR) spectrum of a polyamide-based polymer obtained in Example 2.
Fig. 4 is a graph showing an infrared absorption spectrum of the polyamide-based polymer obtained in Example 2.
Fig. 5 is a graph showing a nuclear magnetic resonance (¹H-NMR) spectrum of a polyamide-based polymer obtained in Example 3.
Fig. 6 is a graph showing an infrared absorption spectrum of the polyamide-based polymer obtained in Example 3.
Fig. 7 is a graph showing a nuclear magnetic resonance (¹H-NMR) spectrum of a polyamide-based polymer obtained in Example 4.
Fig. 8 is a graph showing an infrared absorption spectrum of the polyamide-based polymer obtained in Example 4.
Fig. 9 is a graph showing a nuclear magnetic resonance (¹H-NMR) spectrum of a polyamide-based polymer obtained in Example 5.
Fig. 10 is a graph showing an infrared absorption spectrum of the polyamide-based polymer obtained in Example 5.
Fig. 11 is a graph showing a nuclear magnetic resonance (¹H-NMR) spectrum of a polyamide-based polymer obtained in Example 6.
Fig. 12 is a graph showing an infrared absorption spectrum of the polyamide-based polymer obtained in Example 6.
Fig. 13 is a graph showing a nuclear magnetic resonance (¹H-NMR) spectrum of a polyamide-based polymer obtained in Example 7.
Fig. 14 is a graph showing an infrared absorption spectrum of the polyamide-based polymer obtained in Example 7.

### MODE FOR CARRYING OUT THE INVENTION

The polyamide-based polymer according to the present invention is a polyamide-based polymer of a dicarboxylic acid, a diamine and an aminoalkylcarboxylic acid, wherein itaconic acid is used as the dicarboxylic acid; a diamine represented by formula (I):

H₂N-R¹-NH₂ (I)

wherein R¹ is an alkylene group having 4 to 12 carbon atoms,
is used as the diamine; and an aminoalkylcarboxylic acid represented by formula (II):

   HOOC-R²-NH₂ (II)

   wherein R² is an alkylene group having 8 to 12 carbon atoms,
   is used as the aminoalkylcarboxylic acid.

The polyamide-based polymer according to the present invention is excellent in degradability in water, extensibility and toughness, because itaconic acid, the diamine represented by formula (I) and the aminoalkylcarboxylic acid represented by formula (II) are used as raw material monomers.

The polyamide-based polymer according to the present invention can be prepared by carrying out a reaction of itaconic acid with the diamine represented by formula (I) and the aminoalkylcarboxylic acid represented by formula (II), and carrying out a polymerization of the resulting reaction product.

The itaconic acid is easily commercially available from, for example, FUSO CHEMICAL CO., LTD., IWATA CHEMICAL CO., LTD., Cargill, Incorporated, and the like. The itaconic acid can be prepared with fungus such as Aspergillus terreus. Alternatively, the itaconic acid can be synthesized by using petroleum as a raw material. Among these itaconic acids, the itaconic acid prepared with fungus such as Aspergillus terreus has advantageous merits of being more environmentally friendly in the earth than the itaconic acid synthesized by using petroleum as a raw material.

In the diamine represented by formula (I), R¹ is an alkylene group having 4 to 12 carbon atoms from the viewpoint of obtaining a polyamide-based polymer having degradability in water, extensibility and toughness.

Among the diamines represented by formula (I), a diamine having an alkylene group of 4 to 8 carbon atoms is preferable, a diamine having an alkylene group of 6 to 8 carbon atoms is more preferable, and a diamine having an alkylene group of 6 carbon atoms is furthermore preferable, from the viewpoint of obtaining a polyamide-based polymer being excellent in degradability in water, extensibility and toughness. The diamine having an alkylene group of 4 to 8 carbon atoms includes 1,4-butanediamine, 1,5-pentanediamine, 1,6-hexanediamine, 1,7-heptanediamine and 1,8-octanediamine. These diamines can be used alone respectively, or two or more kinds thereof can be used in combination.

In addition, among the diamines represented by formula (I), a diamine having an alkylene group of 10 to 12 carbon atoms is preferred, because the diamine can be available as a bio-based monomer, and from the viewpoint of improvement in degradability in water and extensibility of the polyamide-based polymer. The diamine having an alkylene group of 10 to 12 carbon atoms includes 1,10-decanediamine, 1,11-undecanediamine and 1,12-dodecanediamine. These diamines can be used alone respectively, or two or more kinds thereof can be used in combination.

In the aminoalkylcarboxylic acid represented by formula (II), R² is an alkylene group having 8 to 12 carbon atoms, preferably an alkylene group having 10 to 12 carbon atoms, more preferably an alkylene group having 10 or 11 carbon atoms, and furthermore preferably an alkylene group having 11 carbon atoms, from the viewpoint of obtaining a polyamide-based polymer having degradability in water, extensibility and toughness.

The aminoalkylcarboxylic acid represented by formula (II) includes, for example, 8-aminooctanoic acid, 9-aminonanoic acid, 10-aminodecanoic acid, 11-aminoundecanoic acid and 12-aminododecanoic acid. These aminoalkylcarboxylic acids can be used alone, or two or more kinds thereof can be used in combination.

Among the aminoalkylcarboxylic acids represented by formula (II), 10-aminodecanoic acid, 11-aminoundecanoic acid and 12-aminododecanoic acid are preferred, and 11-aminoundecanoic acid is more preferred, from the viewpoint of obtaining a polyamide-based polymer having degradability in water, extensibility and toughness.

In the present invention, there is one of characteristics according to the present invention in that the diamine represented by formula (I) and the aminoalkylcarboxylic acid represented by formula (II) are used in combination. In the present invention, since the diamine represented by formula (I) and the aminoalkylcarboxylic acid represented by formula (II) are used in combination, a polyamide-based polymer having degradability in water, extensibility and toughness can be obtained.

A molar ratio of the diamine represented by formula (I) to the aminoalkylcarboxylic acid represented by formula (II) [diamine represented by formula (I)/aminoalkylcarboxylic acid represented by formula (II)] is preferably 10/90 to 60/40, more preferably 15/85 to 55/45, further preferably 15/85 to 50/50, and furthermore preferably 20/80 to 45/55, from the viewpoint of obtaining a polyamide-based polymer having degradability in water, extensibility and toughness.

Incidentally, in the present invention, an amino group-containing compound other than the diamine represented by formula (I) and the aminoalkylcarboxylic acid represented by formula (II) (hereinafter referred to as other amino group-containing compound) can be used within a scope which would not hinder an object of the present invention. The other amino group-containing compound includes, for example, aromatic diamines such as phenylenediamine and xylylenediamine, and the like. The present invention is not limited only to those exemplified ones.

The amount of the diamine represented by formula (I) per one mole of itaconic acid is theoretically one mole, because itaconic acid reacts with the diamine represented by formula (I) in a stoichiometric amount. However, the amount of itaconic acid can be excessive relative to the amount of the diamine represented by formula (I), or the amount of the diamine represented by formula (I) can be excessive relative to the amount of itaconic acid, when the polyamide-based polymer according to the present invention is prepared.

A reaction of itaconic acid, the diamine represented by formula (I) and the aminoalkylcarboxylic acid represented by formula (II) can be carried out in an organic solvent. It is preferred that the organic solvent can dissolve itaconic acid, the diamine represented by formula (I) and the aminoalkylcarboxylic acid represented by formula (II) within a temperature range of 20 to 90 °C, and that the organic solvent has poor solubility or insolubility for a reaction product of itaconic acid, the diamine represented by formula (I) and the aminoalkylcarboxylic acid represented by formula (II).

The organic solvent includes, for example, aliphatic alcohols having 1 to 3 carbon atoms, such as methanol, ethanol and propanol; ketone compounds such as acetone and methyl ethyl ketone; ethyl acetate, tetrahydrofuran, dioxane, chloroform, dichloromethane, chlorobenzene, phenol, cresol, and the like. The present invention is not limited only to those exemplified ones. These organic solvents can be used alone respectively, or two or more kinds thereof can be used in combination.

The amount of the organic solvent is not particularly limited so long as a reaction of itaconic acid, the diamine represented by formula (I) and the aminoalkylcarboxylic acid represented by formula (II) can be efficiently carried out. The amount of the organic solvent is usually preferably an amount 3 to 20 times or so of the total amount (mass) of itaconic acid, the diamine represented by formula (I) and the aminoalkylcarboxylic acid represented by formula (II), and more preferably an amount 5 to 15 times or so of the total amount (mass) of itaconic acid, the diamine represented by formula (I) and the aminoalkylcarboxylic acid represented by formula (II).

When a reaction of itaconic acid, the diamine represented by formula (I) and the aminoalkylcarboxylic acid represented by formula (II) is carried out, a reaction temperature is not particularly limited. The reaction temperature is preferably 20 to 90 °C or so from the viewpoint of increase in reaction efficiency. In addition, when the reaction of itaconic acid, the diamine represented by formula (I) and the aminoalkylcarboxylic acid represented by formula (II) is carried out, a reaction time cannot be absolutely determined because the reaction time differs depending on an amount of the organic solvent used, the reaction temperature and the like. The reaction time is usually 2 to 6 hours or so. When the reaction of itaconic acid, the diamine represented by formula (I) and the aminoalkylcarboxylic acid represented by formula (II) is carried out, a reaction atmosphere is not particularly limited, and can be the atmosphere or an inert gas such as nitrogen gas or argon gas.

A reaction mixture can be obtained by carrying out a reaction of itaconic acid, the diamine represented by formula (I) and the aminoalkylcarboxylic acid represented by formula (II) as mentioned above.

After the reaction, a reaction product can be collected from the reaction mixture by crystallization. A method for crystallizing the reaction product from the reaction mixture includes, for example, a method of cooling the reaction mixture to a temperature of 0 to 25 °C or so, a method of adding dropwise a poor solvent such as hexane, toluene or xylene to the reaction mixture, a method of evaporating a solvent included in the reaction mixture, and the like. The present invention is not limited only to those methods.

The crystallized reaction product can be collected from the reaction mixture by a method such as filtration. The collected reaction product can be washed with the above-mentioned organic solvent having a temperature of 0 to 25 °C or so as occasion demands. In addition, the reaction product obtained in the above can be dried, for example, by vacuum drying or the like.

Next, a polymerization of the reaction product obtained in the above is carried out to give the polyamide-based polymer according to the present invention.

A method for carrying out a polymerization of the reaction product includes, for example, a bulk polymerization method, a solution polymerization method, a suspension polymerization method, an emulsion polymerization method and the like, and the present invention is not limited only to those exemplified ones. Among these polymerization methods, the bulk polymerization method is preferred from the viewpoint of efficient preparation of a polyamide-based polymer including impurities in a small amount. When the polyamide-based polymer is prepared by the bulk polymerization method, the polyamide-based polymer can be prepared by heating the reaction product obtained in the above to a polymerization temperature of 150 to 250 °C or so to polymerize. When the polymerization of the reaction product is carried out, an atmosphere is not particularly limited, and can be the atmosphere or an inert gas such as nitrogen gas or argon gas. The atmosphere is preferably a gas including oxygen in a low content, and more preferably an inert gas, from the viewpoint of avoidance of influence due to oxygen included in the atmosphere. The polymerization time of the reaction product is not particularly limited, and is usually 2 to 24 hours or so.

Incidentally, when the polymerization of the reaction product is carried out, it is preferred to use a catalyst in an appropriate amount from the viewpoint of efficient preparation of the polyamide-based polymer. The catalyst includes, for example, lithium dihydrogen phosphate, dilithium hydrogen phosphate, trilithium phosphate, sodium dihydrogen phosphate, disodium hydrogen phosphate, trisodium phosphate, potassium dihydrogen phosphate, dipotassium hydrogen phosphate, tripotassium phosphate and the like, and the present invention is not limited only to those exemplified ones. Among the catalysts, sodium dihydrogen phosphate, disodium hydrogen phosphate and trisodium phosphate are preferred, and sodium dihydrogen phosphate is more preferred.

The polyamide-based polymer can be obtained by carrying out the polymerization of the reaction product as mentioned above. The polyamide-based polymer obtained in the above can be purified, for example, by dissolving the polyamide-based polymer in a solvent such as N,N-dimethylformamide, and thereafter precipitating the polyamide-based polymer with a ketone compound such as acetone as occasion demands. In addition, the polyamide-based polymer obtained in the above can be dried, for example, by vacuum drying and the like.

The polyamide-based polymer according to the present invention obtained in the above is a polymer of itaconic acid, the diamine represented by formula (I) and the aminoalkylcarboxylic acid represented by formula (II). The polyamide-based polymer usually has a recurring unit represented by formula (IIIa): 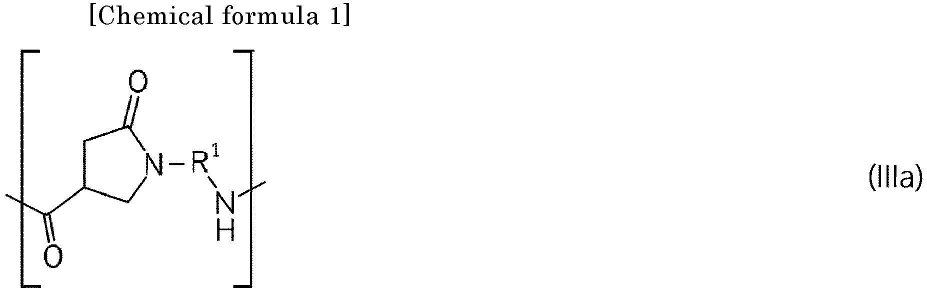
wherein R¹ is the same as mentioned above,
and a recurring unit represented by formula (IIIb): 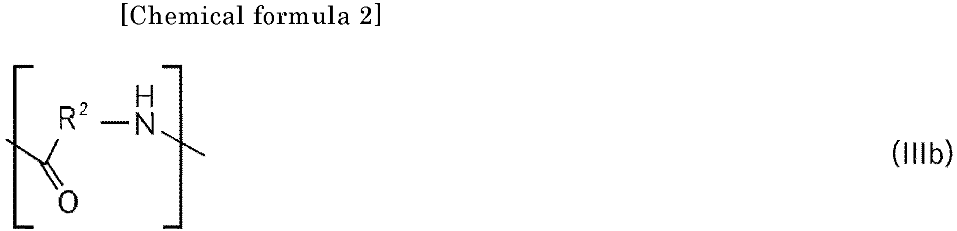
wherein R² is the same as mentioned above.

The polyamide-based polymer according to the present invention is excellent in degradability in water, extensibility and toughness, because the polyamide-based polymer is a polymer of itaconic acid, the diamine represented by formula (I) and the aminoalkylcarboxylic acid represented by formula (II), and has the recurring unit represented by formula (IIIa) and the recurring unit represented by formula (IIIb).

A molar ratio of the recurring unit represented by formula (IIIa) to the recurring unit represented by formula (IIIb) [recurring unit represented by formula (IIIa)/recurring unit represented by formula (IIIa)] is substantially the same as the molar ratio of the diamine represented by formula (I) to the aminoalkylcarboxylic acid represented by formula (II) [diamine represented by formula (I)/aminoalkylcarboxylic acid represented by formula (II)].

Accordingly, the molar ratio of the recurring unit represented by formula (IIIa) to the recurring unit represented by formula (IIIb) [recurring unit represented by formula (IIIa)/recurring unit represented by formula (IIIb)] is preferably 10/90 to 60/40, more preferably 15/85 to 55/45, further preferably 20/80 to 50/50, and furthermore preferably 25/75 to 45/55, from the viewpoint of obtaining a polyamide-based polymer having degradability in water, extensibility and toughness.

The content of the recurring unit represented by formula (IIIa) in the polyamide-based polymer according to the present invention is preferably 10 to 60 % by mole, more preferably 15 to 55 % by mole, further preferably 15 to 50 % by mole, and furthermore preferably 25 to 45 % by mole, from the viewpoint of obtaining a polyamide-based polymer having degradability in water, extensibility and toughness. In addition, the content of the recurring unit represented by formula (IIIb) in the polyamide-based polymer according to the present invention is preferably 40 to 90 % by mole, more preferably 45 to 85 % by mole, further preferably 50 to 85 % by mole, and furthermore preferably 55 to 75 % by mole, from the viewpoint of obtaining a polyamide-based polymer having degradability in water, extensibility and toughness.

The recurring unit represented by formula (IIIa) and the recurring unit represented by formula (IIIb) usually exist randomly in the polyamide-based polymer according to the present invention. However, these recurring units can exist alternately or in blocks.

Incidentally, a recurring unit represented by formula (IIIc): 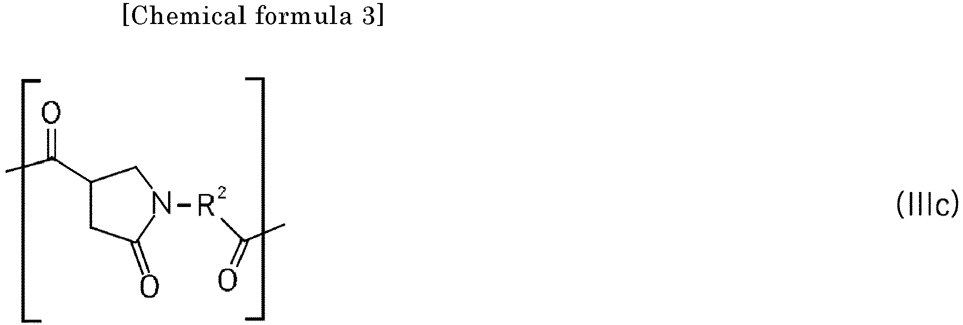
wherein R² is the same as mentioned above,
and a recurring unit represented by formula (IIId): 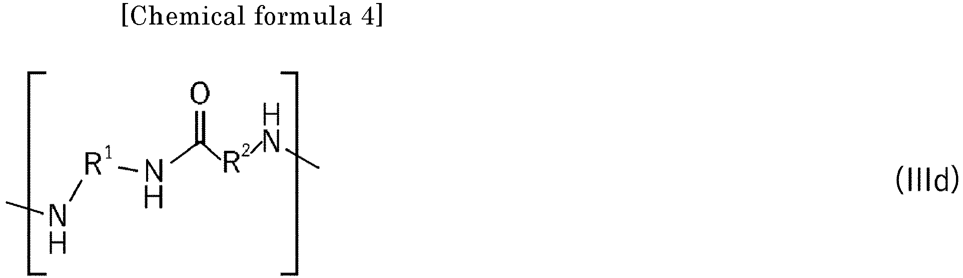
wherein R¹ and R² are the same as mentioned above,
might be included in the polyamide-based polymer according to the present invention, other than the recurring unit represented by formula (IIIa) and the recurring unit represented by formula (IIIb), depending on the kind and amount of each compound, reaction conditions, and the like.

Therefore, the polyamide-based polymer according to the present invention may have not only the recurring unit represented by formula (IIIa) and the recurring unit represented by formula (IIIb), but also the recurring unit represented by formula (IIIc) and the recurring unit represented by formula (IIId) in one molecule.

The molar ratio of the sum of the recurring unit represented by formula (IIIa) and the recurring unit represented by formula (IIIc) [hereinafter both recurring units are referred to as "oxopyrrolidine structure-containing recurring unit"] to the sum of the recurring unit represented by formula (IIIb) and the recurring unit represented by formula (IIId) [hereinafter both recurring units are referred to as "carbonylalkylamine structure-containing recurring unit"] [oxopyrrolidine structure-containing recurring unit/carbonylalkylamine structure-containing recurring unit] is preferably 10/90 to 60/40, more preferably 15/85 to 55/45, further preferably 20/80 to 50/50, and furthermore preferably 25/75 to 45/55, from the viewpoint of obtaining a polyamide-based polymer having degradability in water, extensibility and toughness.

The content of the oxopyrrolidine structure-containing recurring unit in the polyamide-based polymer according to the present invention is preferably 10 to 60 % by mole, more preferably 15 to 55 % by mole, further preferably 15 to 50 % by mole, and furthermore preferably 25 to 45 % by mole, from the viewpoint of obtaining a polyamide-based polymer having degradability in water, extensibility and toughness. In addition, the content of the carbonylalkylamine structure-containing recurring unit in the polyamide-based polymer according to the present invention is preferably 40 to 90 % by mole, more preferably 45 to 85 % by mole, further preferably 50 to 85 % by mole, and furthermore preferably 55 to 75 % by mole, from the viewpoint of obtaining a polyamide-based polymer having degradability in water, extensibility and toughness.

In the polyamide-based polymer according to the present invention, the recurring unit represented by formula (IIIa), the recurring unit represented by formula (IIIb), the recurring unit represented by formula (IIIc) and the recurring unit represented by formula (IIId) usually exist randomly. However, these recurring units can exist alternately or in blocks.

Incidentally, the polyamide-based polymer according to the present invention may include a recurring unit other than the recurring unit represented by formula (IIIa), the recurring unit represented by formula (IIIb), the recurring unit represented by formula (IIIc) and the recurring unit represented by formula (IIId) [hereinafter referred to as "other recurring unit"] within a scope which would not hinder an object of the present invention. The above-mentioned other recurring unit may include not only a recurring unit which unavoidably generates as a byproduct when the polymerization of itaconic acid, the diamine represented by formula (I) and the aminoalkylcarboxylic acid represented by formula (II) is carried out, other than the recurring unit represented by formula (IIIa), the recurring unit represented by formula (IIIb), the recurring unit represented by formula (IIIc) and the recurring unit represented by formula (IIId), but also a recurring unit based on a third monomer which is used as another monomer other than itaconic acid, the diamine represented by formula (I) and the aminoalkylcarboxylic acid represented by formula (II). The third monomer can be used within a scope which would not hinder an object of the present invention.

The number-average molecular weight of the polyamide-based polymer according to the present invention is not particularly limited, and is preferably 15000 to 800000, more preferably 20000 to 500000, and further preferably 50000 to 300000, from the viewpoint of obtaining a polyamide-based polymer having degradability in water, extensibility and toughness. Incidentally, the number-average molecular weight of the polyamide-based polymer is a value as determined in accordance with a method described in the following working examples.

The polyamide-based polymer according to the present invention is melted by heating. Therefore, the molten polyamide-based polymer liquid can be used as a spinning dope. A solution of the polyamide-based polymer according to the present invention, which is prepared by dissolving the polyamide-based polymer in an organic solvent, can also be used as a spinning dope.

When the molten polyamide-based polymer is used as a spinning dope, a polyamide-based fiber can be produced by extruding the molten polyamide-based polymer from a pore of a spinneret of a melt spinning apparatus, and thereafter, cooling the molten polyamide-based polymer. When the solution of the polyamide-based polymer, which is prepared by dissolving the polyamide-based polymer in an organic solvent is used as a spinning dope, a polyamide-based fiber can be produced by removing the organic solvent from the solution of the polyamide-based polymer by volatilization.

The spinneret is generally made of an alloy of gold and platinum, an alloy of platinum and iridium, an alloy of platinum and palladium, or the like. The diameter of the spinneret is appropriately determined in accordance with the fineness of a target polyamide-based fiber. The diameter of the spinneret is usually 0.05 to 0.1 mm or so. The number of the pore provided in the spinneret is not particularly limited. The number of the pore is usually 1 to 20000 or so.

The polyamide-based fiber can be a single fiber (a filament). Alternatively, the polyamide-based fiber can be a bundle of fibers (a strand) produced by converging plural single fibers made by extruding the spinning dope from plural pores of the spinneret.

The polyamide-based fiber obtained in the above can be subjected to a treatment such as washing with water, drying or crimping as occasion demands.

The fineness of the polyamide-based fiber obtained in the above cannot be absolutely determined, because the fineness differs depending on uses of the polyamide-based fiber. Therefore, it is preferred to determine the fineness of the polyamide-based fiber in accordance with the uses and the like of the polyamide-based fiber. One example of the fineness of the polyamide-based fiber includes, for example, 1 to 30 dtex. However, the present invention is not limited by the fineness. The fineness of the polyamide-based fiber can be easily controlled by adjusting the pore diameter of the spinneret or adjusting a stretching ratio of the polyamide-based fiber in stretching.

The polyamide-based fiber obtained in the above can be stretched in order to improve mechanical strength of the polyamide-based fiber as occasion demands. The stretching of the polyamide-based fiber is usually one-step stretching. However, the stretching of the polyamide-based fiber can be a multi-stage stretching for additionally stretching the polyamide-based fiber under different conditions such as different temperatures.

The polyamide-based fiber can be used as a long fiber. Alternatively, the polyamide-based fiber can be used as a staple fiber by cutting the polyamide-based fiber to a desired fiber length. The fiber length of the polyamide-based fiber differs depending on uses of the polyamide-based fiber. Accordingly, it is preferred that the fiber length of the polyamide-based fiber is appropriately determined in accordance with the uses and the like of the polyamide-based fiber. The polyamide-based fiber can be used, for example, for a woven fabric, a nonwoven fabric, a knitting and the like.

The knitting can be produced by knitting the polyamide-based fiber with a stockinette knitting machine, and the like. When knitting is produced, the polyamide-based fiber can be used as it is, or a blended yarn of the polyamide-based fiber and a fiber such as a synthetic fiber such as a polyester fiber or an acrylic fiber, a cotton thread, knitting wool, or a raw silk thread can be used. The knitting includes, for example, flat knitting, rubber knitting, pearl knitting and the like, and the present invention is not limited only to those exemplified ones.

The woven fabric can be produced by using the polyamide-based fiber as a warp, a weft or both of a warp and a weft, and weaving the warp and the weft with a loom, and the like. The woven fabric can be a blended woven fabric in which a blended yarn containing the polyamide-based fiber is used in a part or both of a warp and a weft. The woven fabric can be a mixed woven fabric in which the polyamide-based fiber is used in a warp and/or a weft, and a component of the warp is different from that of the weft. Alternatively, the woven fabric can be a high distribution fabric containing the polyamide-based fiber according to the present invention, in which a warp and a weft each having a different fiber diameter from each other are used. The texture of the woven fabric includes, for example, a plain weave texture, an oblique weave texture, a twill weave texture, a satin weave texture, a change organization texture and the like, and the present invention is not limited only to those exemplified ones.

The nonwoven fabric can be manufactured by a dry method or a wet method using fibers including the polyamide-based fiber. The fiber used in the nonwoven fabric can be composed only of the polyamide-based fiber, or can be a blended yarn of the polyamide-based fiber and a fiber such as a synthetic fiber such as a polyester fiber or an acrylic fiber, a cotton thread, knitting wool, or a raw silk thread. The dry method includes, for example, a chemically bonding method, a thermally bonding method, a mechanically bonding method such as a needle punching method or an air-laid method, and the like. The present invention is not limited only to those exemplified ones. The wet method includes, for example, a water-jet interlacing method and the like, and the present invention is not limited only to the exemplified ones.

Since the polyamide-based fiber includes the polyamide-based polymer according to the present invention, the polyamide-based fiber is excellent in degradability in water, extensibility and toughness. Accordingly, the polyamide-based fiber can be suitably used for fishing gears such as a fishing net and a fishing line, and agricultural implements. The polyamide-based fiber also can be suitably used for various uses such as clothing such as gloves, underwear, socks, shirts and clothes, a face mask, a paper diaper material, a lotion sheet for wiping, and the like.

In addition, since the polyamide-based polymer according to the present invention is dissolved in an organic solvent, the polyamide-based polymer can be used as a solution of an organic solvent. Since the polyamide-based polymer has thermoplasticity, the polyamide-based polymer can be used as a molten material by heating and melting the polyamide-based polymer. Therefore, the polyamide-based polymer according to the present invention can be suitably used for a molding material such as an injection molding material for a molded body such as a film or a plate. In addition, a molded body can be produced from a molding material made by mixing the polyamide-based polymer according to the present invention with a fiber with a three-dimensional (3D) printer.

An additive can be included in the polyamide-based polymer according to the present invention in an appropriate amount in accordance with uses thereof as occasion demands. The additive includes, for example, a colorant such as a pigment or a dye, an ultraviolet absorbing agent, an ultraviolet stabilizer, an antioxidant, an anti-rust agent, an antibacterial agent, a plasticizer, an alga-proofing agent, an antifungal agent, a flame retardant, a foaming agent and the like, and the present invention is not limited only to those exemplified ones. These additives can be used alone respectively, or two or more kinds thereof can be used in combination. Since the amount of the additive cannot be absolutely determined because the amount of the additive differs depending on the kind of the additive. Therefore, it is preferred that the amount of the additive is appropriately determined in accordance with the kind of the additive.

### EXAMPLES

Next, the present invention is more specifically described based on working examples. However, the present invention is not limited only to the working examples.

Incidentally, physical properties of polymers obtained in the following each working example and the following each comparative example were examined based on the following methods.

### [Structure of polymer]

### (1) Nuclear magnetic resonance (¹H-NMR) spectrum

The nuclear magnetic resonance (¹H-NMR) spectrum of a polymer was determined by using a sample tube made of glass into which a solution prepared by dissolving 5 mg of a sample (polymer) in 0.5 mL of dimethyl sulfoxide-d₆ at a temperature of 25 °C for accumulation count of 16 times with a nuclear magnetic resonance device [manufactured by Bruker Corporation, trade name: AVANCE III 400, 400MHz].

### (2) Infrared absorption spectrum

An infrared absorption spectrum of a polymer was determined at a measurement wave number of 400 to 4000 cm⁻¹ and at a cumulative number of 8 with an infrared spectroscopic analyzer [manufactured by PerkinElmer, U.S. LLC, trade name: Spectrum 100 (ATR method)].

### [Number average molecular weight of polymer]

A number-average molecular weight of a polymer was determined by gel permeation chromatography (GPC). More specifically, the number-average molecular weight of the polymer was determined by using N,N-dimethylformamide containing 0.01 mol/L of lithium bromide as a solvent by means of a GPC measurement device provided with a refractive index detector [manufactured by JASCO Corporation, product number: RI-2031 Plus] and an ultraviolet detector [manufactured by JASCO Corporation, product number: UV-2075 Plus] as a device [a column manufactured by Showa Denko K.K. under the trade name of Shodex KD-802.5 was connected with a column manufactured by Showa Denko K.K. under the trade name of Shodex KD-804]. Incidentally, polymethyl methacrylate (molecular weight: 1450, 2000, 8000, 20000, 80000, 200000, 800000 or 1000000 g/mol) was used as an external standard.

### [Properties of polymer]

### (1) Differential scanning calorimetry (DSC)

A differential scanning calorimetry was performed within a temperature range of 25 to 300 °C at a heating rate of 10 °C/min in nitrogen gas atmosphere with a differential scanning calorimetry device [manufactured by Seiko Instruments Inc., trade name: EXSTAR DSC 6100]. A glass transition temperature or a melting point of a polymer was determined from the results thereof.

### (2) Thermogravimetric analysis (TGA), 5% weight loss temperature, and 10% weight loss temperature

A thermogravimetric analysis was performed within a temperature range of 25 to 800 °C at a heating rate of 10 °C/min in nitrogen gas atmosphere with a thermogravimetric analysis device [manufactured by Seiko Instruments Inc., trade number: SSC/5200SII]. A 5% weight loss temperature or a 10% weight loss temperature was determined from the result of thermogravimetric analysis. Incidentally, the 5% weight loss temperature means a temperature at which mass of a sample (polymer) decreases by 5%, and the 10% weight loss temperature means a temperature at which mass of a sample (polymer) decreases by 10%.

### (3) Tensile strength of filament, elongation at break and Young's modulus

A tensile strength of a filament was determined by pulling a filament having a fiber diameter of about 200 pm and a length of 40 mm at a crosshead speed of 1 mm/sec at room temperature with a tensile testing machine [manufactured by Illinois Tool Works Inc., trade name: INSTRON 3365-L5], and measuring the maximum intensity of the filament until the filament was broken. An elongation at break of a filament was determined by measuring a length of a filament when the filament is broken in determining the tensile strength of the filament, dividing the length of the filament at break by the original length of the filament, and multiplying an obtained value by 100 to obtain a value which is regarded as the elongation at break. Young's modulus was determined from an initial inclination of the stress-strain curve.

### (4) Toughness

A toughness of a filament is equivalent to an area of a region formed by a line drawn when the filament is broken in the stress-strain curve obtained in the above. Therefore, the area was determined by integrating the region.

### Example 1

A mixed solution was prepared by mixing 1 mole of itaconic acid, 1 mole of hexamethylenediamine (1,6-hexanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

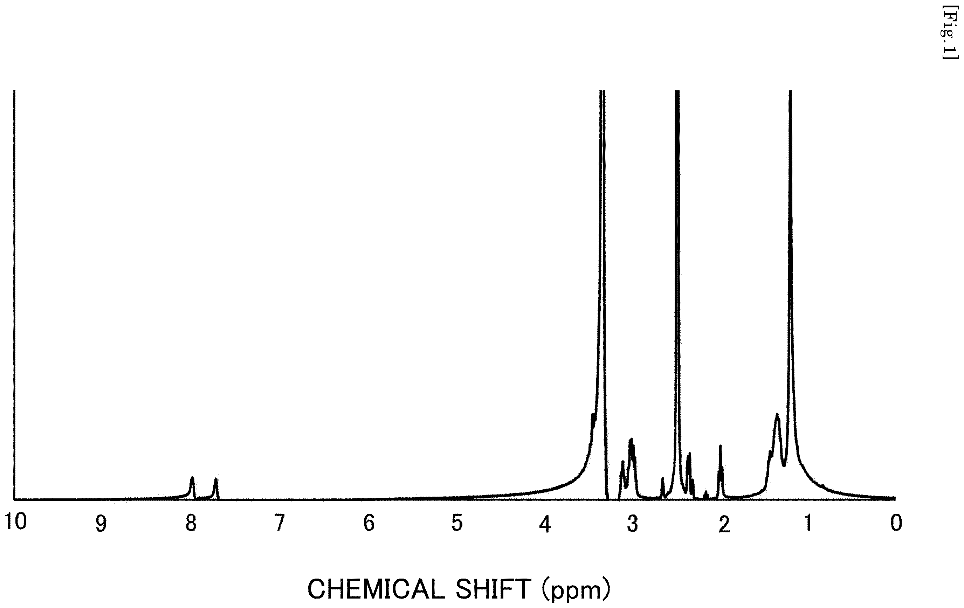

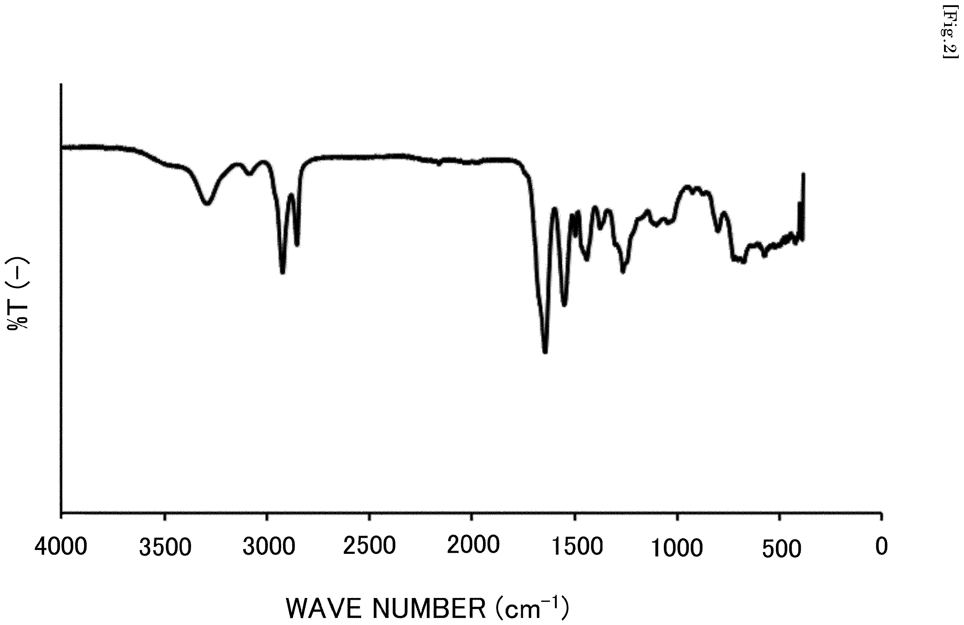

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer A). A nuclear magnetic resonance (¹H-NMR) spectrum of the polymer A is shown in Fig. 1, and an infrared absorption spectrum of the polymer A is shown in Fig. 2.

From these results, it was found that the polymer A was a polymer having a recurring unit represented by formula (IIIa) wherein R¹ was hexamethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 50/50, and that a number average molecular weight of the polymer A was 270000.

The polymer A obtained in the above was heated to 80 °C, and the resulting molten product was used as a molten spinning liquid. The molten spinning liquid obtained in the above was applied to a glass plate, and a glass rod was contacted with the surface of the molten spinning liquid on the glass plate. Thereafter, the glass rod was pulled away from the glass plate to extend the molten spinning liquid, and thereby a filament having a fiber diameter of 200 to 600 pm could be obtained. From this result, it can be seen that a fiber can be easily produced by using the polymer A as a molten spinning liquid.

### Example 2

A mixed solution was prepared by mixing 0.90 moles of itaconic acid, 0.90 moles of hexamethylenediamine (1,6-hexanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

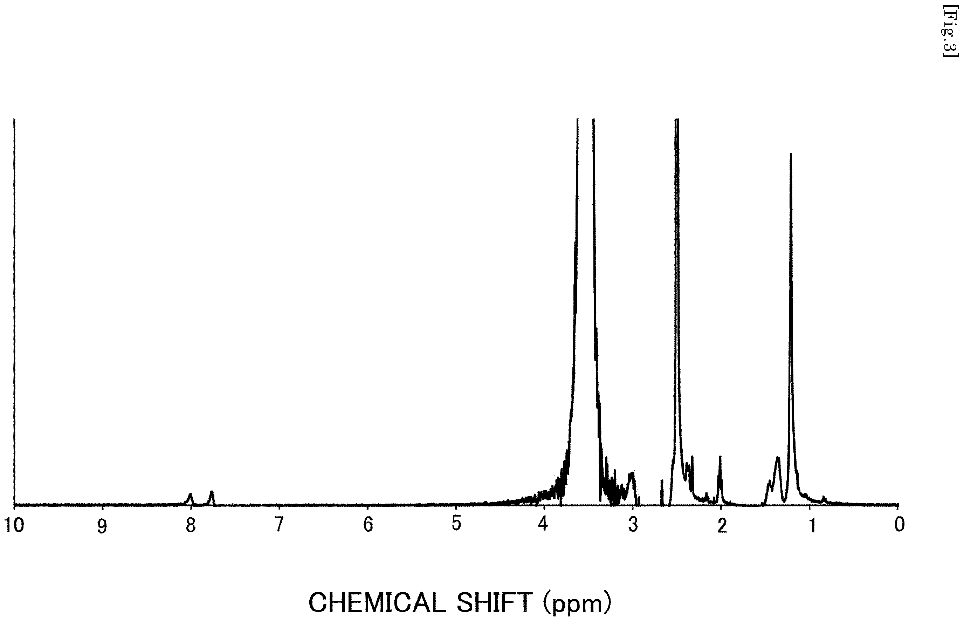

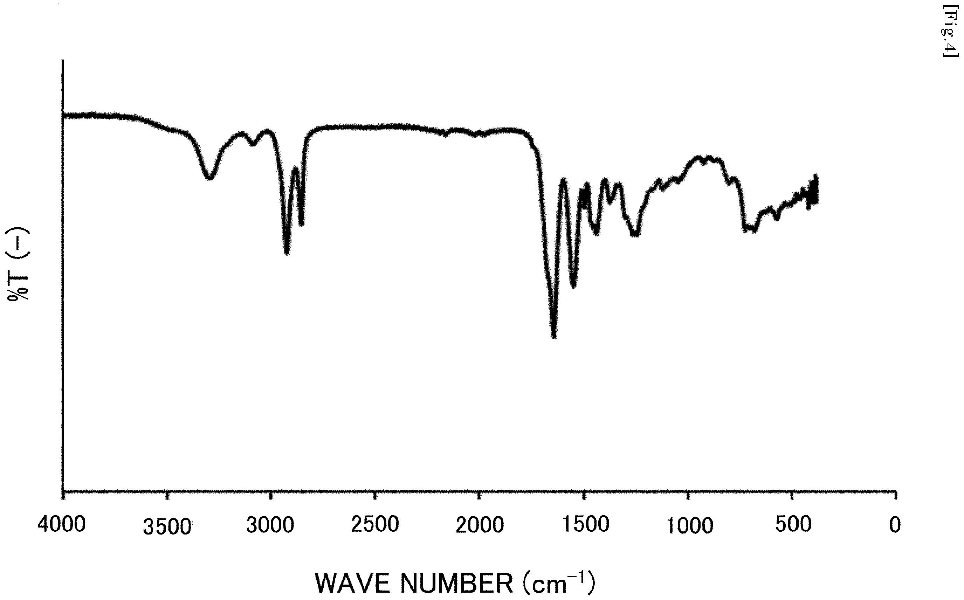

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer B). A nuclear magnetic resonance (¹H-NMR) spectrum of the polymer B is shown in Fig. 3, and an infrared absorption spectrum of the polymer B is shown in Fig. 4.

From these results, it was found that the polymer B was a polymer having a recurring unit represented by formula (IIIa) wherein R¹ was hexamethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 47/53, and that a number average molecular weight of the polymer B was 271000.

A filament could be produced by using the polymer B in the same manner as in Example 1. From this result, it can be seen that a fiber can be easily produced by using the polymer B as a molten spinning liquid.

### Example 3

A mixed solution was prepared by mixing 0.80 moles of itaconic acid, 0.80 moles of hexamethylenediamine (1,6-hexanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

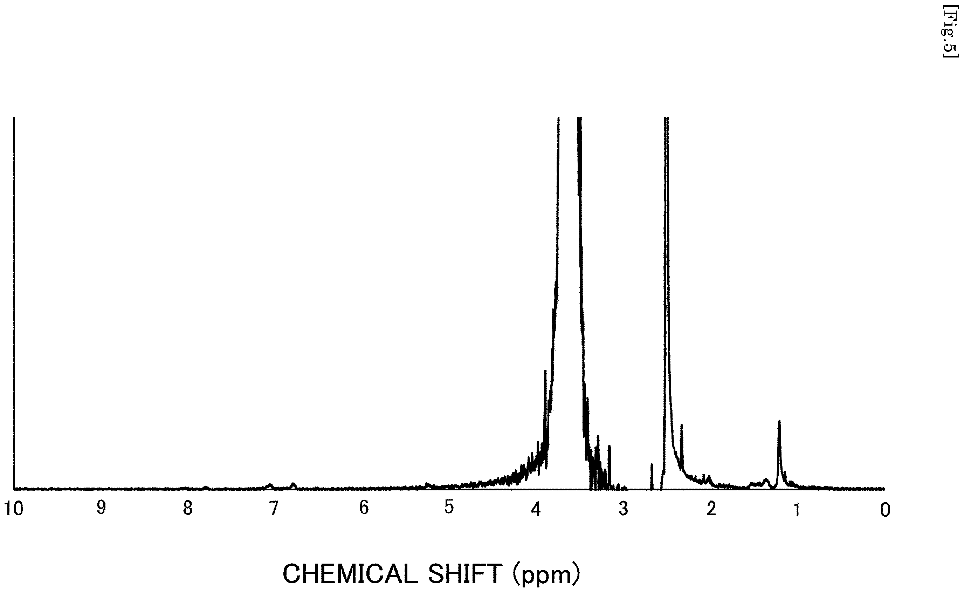

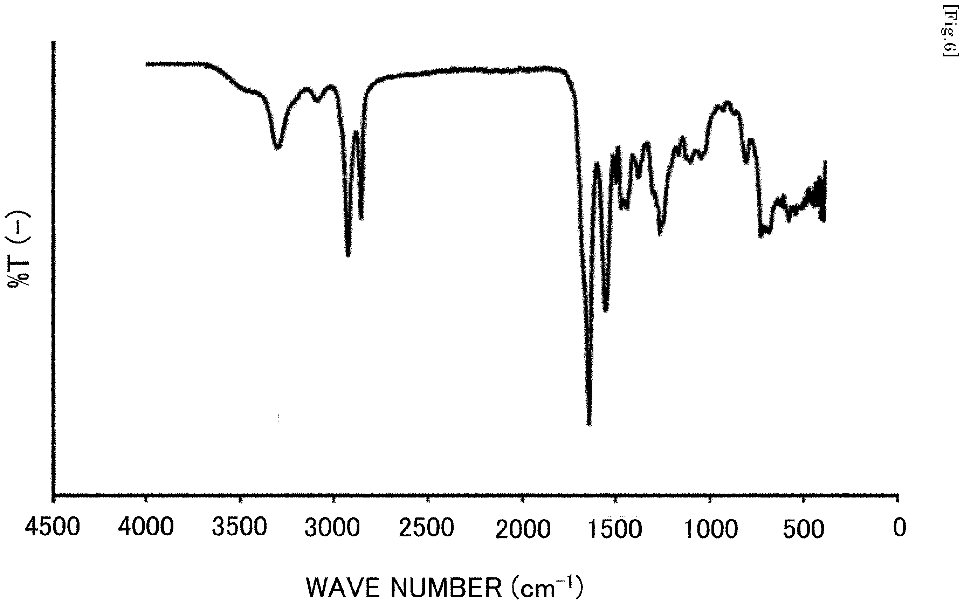

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer C). A nuclear magnetic resonance (¹H-NMR) spectrum of the polymer C is shown in Fig. 5, and an infrared absorption spectrum of the polymer C is shown in Fig. 6.

From these results, it was found that the polymer C is a polymer having a recurring unit represented by formula (IIIa) wherein R¹ was hexamethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 44/56, and that a number average molecular weight of the polymer C was 272000.

A filament could be produced by using the polymer C in the same manner as in Example 1. From this result, it can be seen that a fiber can be easily produced by using the polymer C as a molten spinning liquid.

### Example 4

A mixed solution was prepared by mixing 0.60 moles of itaconic acid, 0.60 moles of hexamethylenediamine (1,6-hexanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

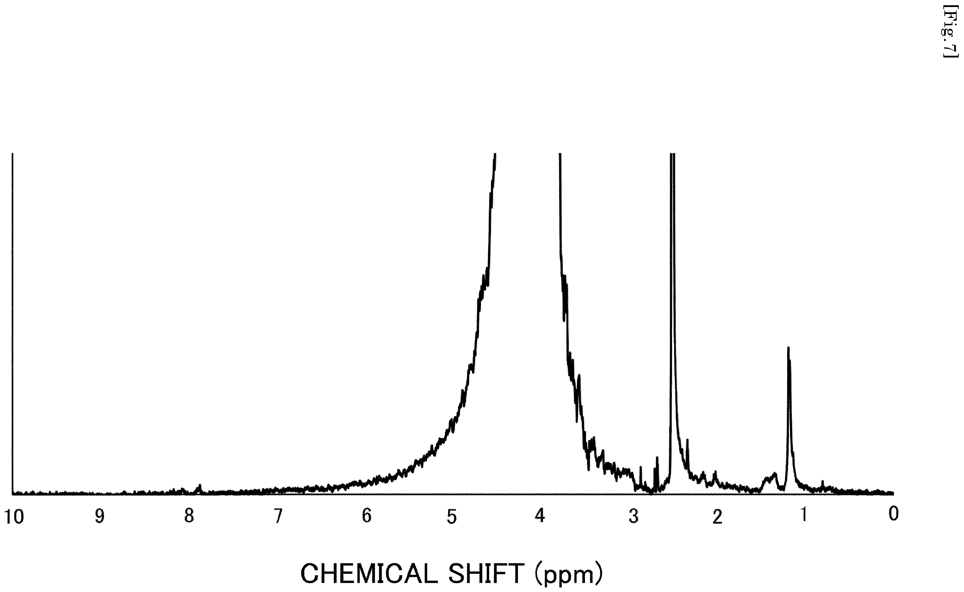

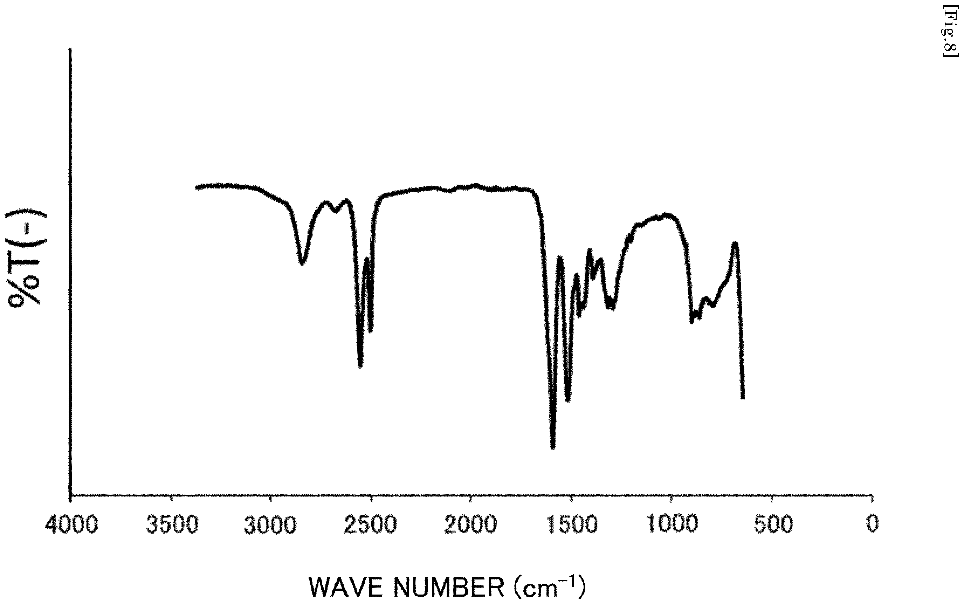

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer D). A nuclear magnetic resonance (¹H-NMR) spectrum of the polymer D is shown in Fig. 7, and an infrared absorption spectrum of the polymer D is shown in Fig. 8.

From these results, it was found that the polymer D was a polymer having a recurring unit represented by formula (IIIa) wherein R¹ was hexamethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 38/62, and that a number average molecular weight of the polymer D was 273000.

A filament could be produced by using the polymer D in the same manner as in Example 1. From this result, it can be seen that a fiber can be easily produced by using the polymer D as a molten spinning liquid.

### Example 5

A mixed solution was prepared by mixing 0.50 moles of itaconic acid, 0.50 moles of hexamethylenediamine (1,6-hexanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

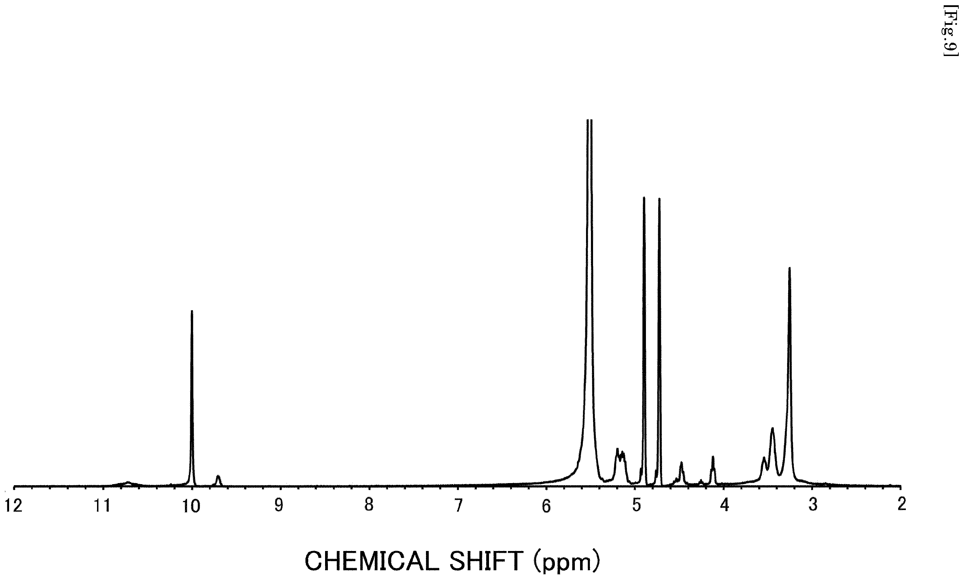

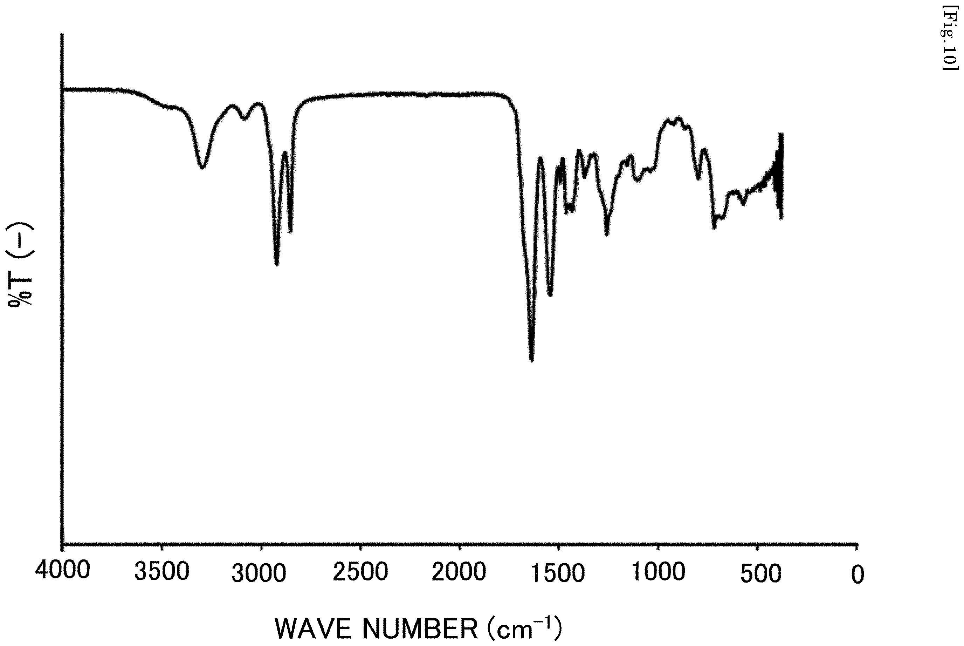

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer E). A nuclear magnetic resonance (¹H-NMR) spectrum of the polymer E is shown in Fig. 9, and an infrared absorption spectrum of the polymer E is shown in Fig. 10.

From these results, it was found that the polymer E was a polymer having a recurring unit represented by formula (IIIa) wherein R¹ was hexamethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 33/67, and that a number average molecular weight of the polymer E was 274000.

A filament could be produced by using the polymer E in the same manner as in Example 1. From this result, it can be seen that a fiber can be easily produced by using the polymer E as a molten spinning liquid.

In addition, a glass plate was flow coated with a solution prepared by dissolving 5g of the polymer E obtained in the above in 30 mL of tetrahydrofuran at a temperature of 25 °C, and thereafter tetrahydrofuran was volatilized and removed from the solution. As a result, a transparent film was obtained. From this result, it can be seen that the polymer E obtained in the above can be used as a molding material by dissolving the polymer E in an organic solvent.

### Example 6

A mixed solution was prepared by mixing 0.30 moles of itaconic acid, 0.30 moles of hexamethylenediamine (1,6-hexanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

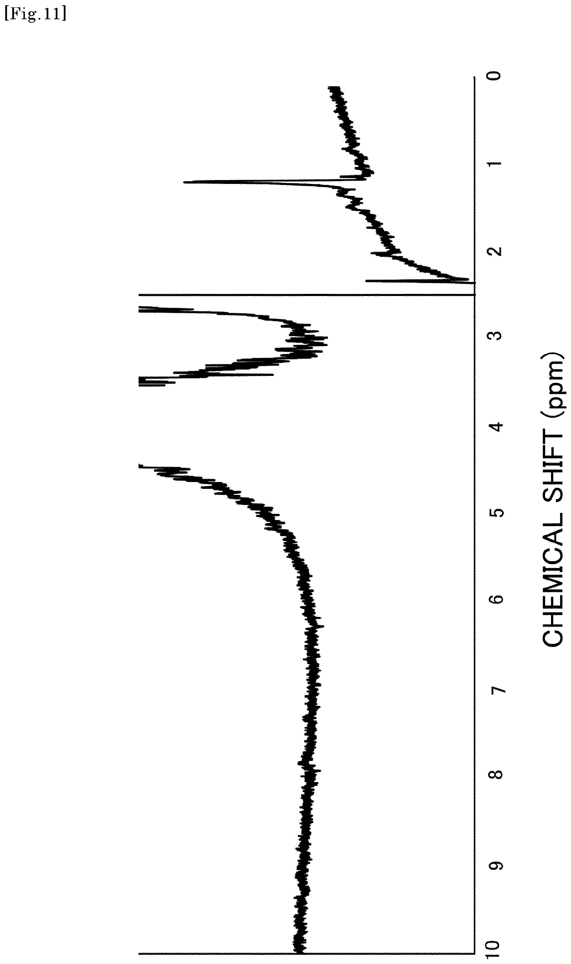

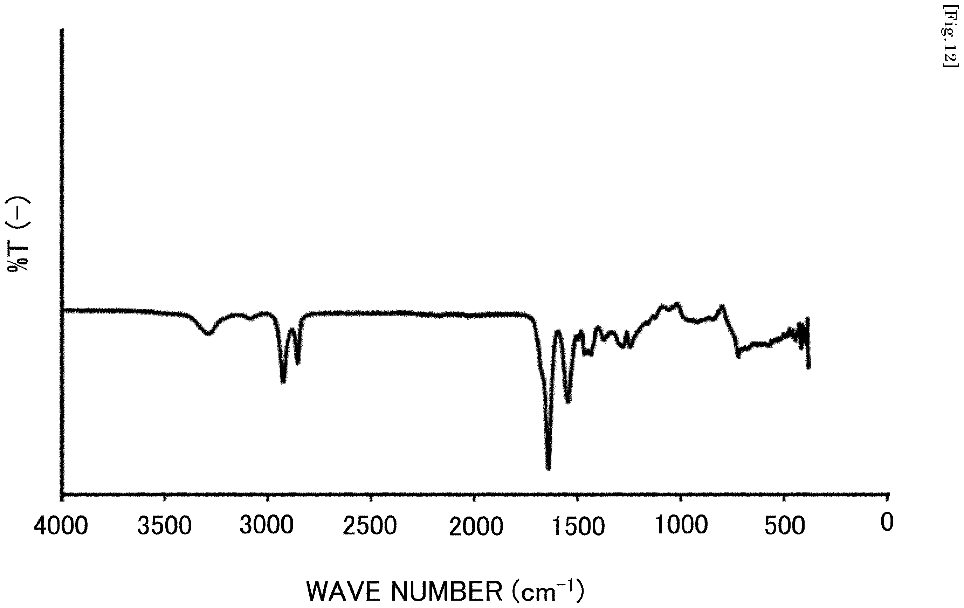

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer F). A nuclear magnetic resonance (¹H-NMR) spectrum of the polymer F is shown in Fig. 11, and an infrared absorption spectrum of the polymer F is shown in Fig. 12.

From these results, it was found that the polymer F was a polymer having a recurring unit represented by formula (IIIa) wherein R¹ was hexamethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 23/77, and that a number average molecular weight of the polymer F was 275100.

A filament could be produced by using the polymer F in the same manner as in Example 1. From this result, it can be seen that a fiber can be easily produced by using the polymer F as a molten spinning liquid.

### Example 7

A mixed solution was prepared by mixing 0.20 moles of itaconic acid, 0.20 moles of hexamethylenediamine (1,6-hexanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

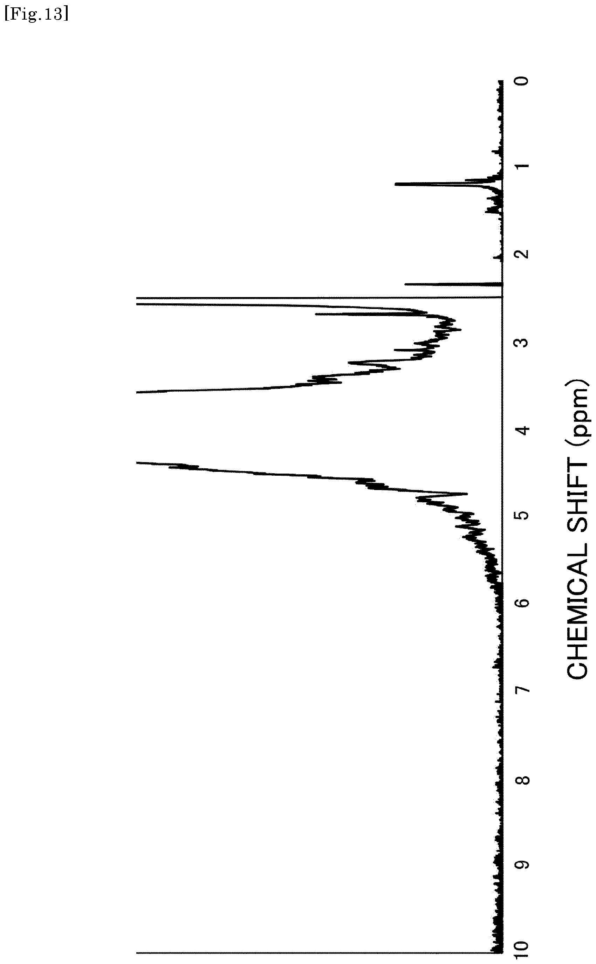

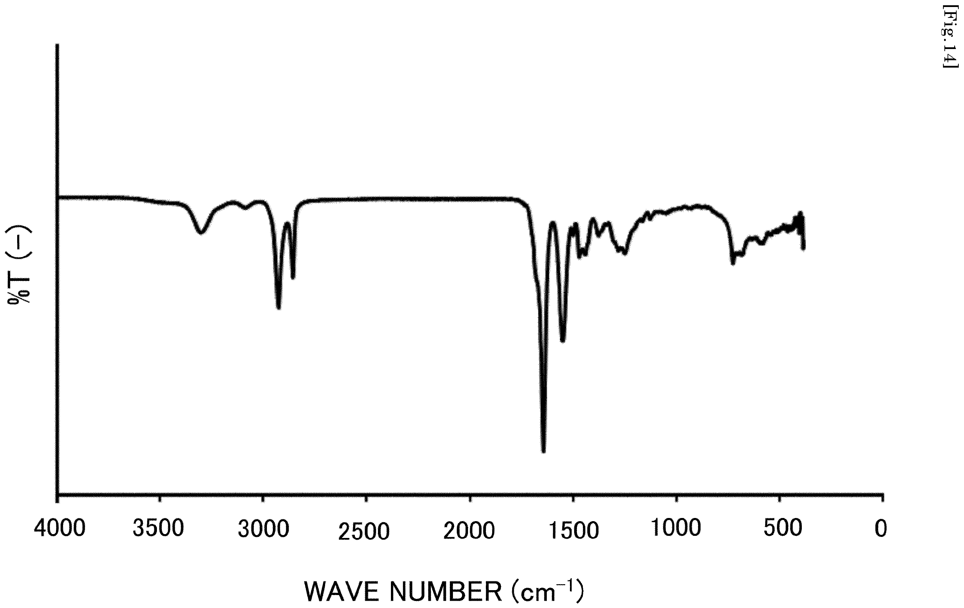

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer G). A nuclear magnetic resonance (¹H-NMR) spectrum of the polymer G is shown in Fig. 13, and an infrared absorption spectrum of the polymer G is shown in Fig. 14.

From these results, it was found that the polymer G was a polymer having a recurring unit represented by formula (IIIa) wherein R¹ was hexamethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 17/83, and that a number average molecular weight of the polymer G was 276000.

A filament could be produced by using the polymer G in the same manner as in Example 1. From this result, it can be seen that a fiber can be easily produced by using the polymer G as a molten spinning liquid.

### Comparative Example 1

A mixed solution was prepared by slowly adding 1 mole of 1,6-hexanediamine to 200 mL of an ethanol solution containing 1 mole of itaconic acid over 2 hours under stirring while a temperature of the ethanol solution was maintained to 45 °C without using 11-aminoundecanoic acid.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst, and the resulting mixture was heated at 190 °C for 6 hours while the reaction atmosphere was depressurized to polymerize the reaction product, to give a polyamide-based polymer (hereinafter referred to as polymer H).

The polymer H obtained in the above was dissolved in N,N-dimethylformamide, and the resulting solution was added to acetone to purify the polymer H, and subsequently the polymer H was washed with acetone. The polymer H was dried in a vacuum dryer at 120 °C for about 24 hours to give a purified polymer H.

Next, as the physical properties of the polymer A to H obtained in the above, a 10% weight loss temperature, a glass transition temperature, a tensile strength, an elongation at break (elongation percentage (%) to original length), Young's modulus and a toughness were examined. The results are shown in Table 1.

**TABLE 1**

| Kind of polyamide-based polymer | Physical properties of polyamide-based polymer | | | | | |
|---|---|---|---|---|---|---|
| | 10% Weight loss temperature (°C) | Glass transition temperature (°C) | Tensile strength (MPa) | Elongation at break (%) | Young's modulus (MPa) | Toughness (MJ/m³) |
| Polymer A | 424 | 40 | 31 | 54 | 58 | 10 |
| Polymer B | 425 | ND | 41 | 54 | 69 | 17 |
| Polymer C | 424 | ND | 114 | 48 | 246 | 31 |
| Polymer D | 424 | ND | 115 | 49 | 345 | 33 |
| Polymer E | 428 | ND | 120 | 60 | 214 | 47 |
| Polymer F | 436 | ND | 80 | 70 | 200 | 46 |
| Polymer F | 425 | ND | 91 | 70 | 130 | 40 |
| Polymer H | - | - | 95 | 3 | 580 | 1.2 |

| | | | | | | |
|---|---|---|---|---|---|---|
| [Note] ND: Not detected -: Not determined | | | | | | |

From the results shown in Table 1, it can be seen that the polyamide-based polymer obtained in each working example is excellent in heat resistance because each polyamide-based polymer has a 10% weight loss temperature of 400 °C or higher.

In addition, Young's modulus of a rubber is 10 to 100 MPa or so; Young's modulus of a fluororesin is 500 MPa or so; Young's modulus of polyethylene is 400 to 1300 MPa or so; Young's modulus of glass is 80000 MPa or so. In contrast, the polyamide-based polymer obtained in each working example has Young's modulus within a range of 50 to 350 MPa, and an elongation at break of 40% or more. Therefore, it can be seen that the polyamide-based polymer obtained in each working example is excellent in elongation property.

In addition, it can be seen that the polyamide-based polymer obtained in each working example is also excellent in rigidity, because the polyamide-based polymer has a toughness of 10 MJ/m³ or more.

### Example 8

A mixed solution was prepared by mixing 1 mole of itaconic acid, 1 mole of tetramethylenediamine (1,4-butanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer I). From the results of determination of nuclear magnetic resonance (¹H-NMR) spectrum and infrared absorption spectrum of the polymer I, it was found that the polymer I was a polymer having a recurring unit represented by formula (IIIa) wherein R¹ was tetramethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 50/50, and that a number average molecular weight of the polymer I was 260000.

A filament could be produced by using the polymer I in the same manner as in Example 1. From this result, it can be seen that a fiber can be easily produced by using the polymer I as a molten spinning liquid.

### Example 9

A mixed solution was prepared by mixing 0.20 moles of itaconic acid, 0.20 moles of tetramethylenediamine (1,4-butanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer J). From the results of determination of nuclear magnetic resonance (¹H-NMR) spectrum and infrared absorption spectrum of the polymer J, it was found that the polymer J was a polymer having a recurring unit represented by formula (IIIa) wherein R¹ was tetramethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 17/83, and that a number average molecular weight of the polymer J was 278000.

A filament could be produced by using the polymer J in the same manner as in Example 1. From this result, it can be seen that a fiber can be easily produced by using the polymer J as a molten spinning liquid.

### Example 10

A mixed solution was prepared by mixing 1 mole of itaconic acid, 1 mole of octamethylenediamine (1,8-octanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer K). From the results of determination of nuclear magnetic resonance (¹H-NMR) spectrum and infrared absorption spectrum of the polymer K, it was found that the polymer K was a polymer having a recurring unit represented by formula (IIIa) wherein R¹ was octamethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 50/50, and that a number average molecular weight of the polymer K was 270000.

A filament could be produced by using the polymer K in the same manner as in Example 1. From this result, it can be seen that a fiber can be easily produced by using the polymer K as a molten spinning liquid.

### Example 11

A mixed solution was prepared by mixing 0.20 moles of itaconic acid, 0.20 moles of octamethylenediamine (1,8-octanediamine) and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer L). From the results of determination of nuclear magnetic resonance (¹H-NMR) spectrum and infrared absorption spectrum of the polymer L, it was found that the polymer L was a polymer having a recurring unit represented by formula (IIIa) wherein R¹ was octamethylene group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 17/83, and that a number average molecular weight of the polymer L was 280000.

A filament could be produced by using the polymer L in the same manner as in Example 1. From this result, it can be seen that a fiber can be easily produced by using the polymer L as a molten spinning liquid.

### Example 12

A mixed solution was prepared by mixing 1 mole of itaconic acid, 1 mole of hexamethylenediamine (1,6-hexanediamine) and 1 mole of 10-aminodecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer M). From the results of determination of nuclear magnetic resonance (¹H-NMR) spectrum and infrared absorption spectrum of the polymer M, it was found that the polymer M was a polymer having a recurring unit represented by formula (IIIa) wherein R¹ was hexamethylene group, and a recurring unit represented by formula (IIIb) wherein R² was nonyl group, that a molar ratio of the recurring unit represented by formula (IIIa) to the recurring unit represented by formula (IIIb) [recurring unit represented by formula (IIIa)/recurring unit represented by formula (IIIb)] was 50/50, and that a number average molecular weight of the polymer M was 268000.

A filament could be produced by using the polymer M in the same manner as in Example 1. From this result, it can be seen that a fiber can be easily produced by using the polymer M as a molten spinning liquid.

### Example 13

A mixed solution was prepared by mixing 0.20 moles of itaconic acid, 0.20 moles of hexamethylenediamine (1,6-hexanediamine) and 1 mole of 10-aminodecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer N). From the results of determination of nuclear magnetic resonance (¹H-NMR) spectrum and infrared absorption spectrum of the polymer N, it was found that the polymer N was a polymer having a recurring unit represented by formula (IIIa) wherein R¹ was hexamethylene group, and a recurring unit represented by formula (IIIb) wherein R² was nonyl group, that a molar ratio of the recurring unit represented by formula (IIIa) to the recurring unit represented by formula (IIIb) [recurring unit represented by formula (IIIa)/recurring unit represented by formula (IIIb)] was 17/83, and that a number average molecular weight of the polymer N was 274000.

A filament could be produced by using the polymer N in the same manner as in Example 1. From this result, it can be seen that a fiber can be easily produced by using the polymer N as a molten spinning liquid.

### Example 14

A mixed solution was prepared by mixing 1 mole of itaconic acid, 1 mole of hexamethylenediamine (1,6-hexanediamine) and 1 mole of 12-aminododecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer O). From the results of determination of nuclear magnetic resonance (¹H-NMR) spectrum and infrared absorption spectrum of the polymer O, it was found that the polymer O was a polymer having a recurring unit represented by formula (IIIa) wherein R¹ was hexamethylene group, and a recurring unit represented by formula (IIIb) wherein R² was undecyl group, that a molar ratio of the recurring unit represented by formula (IIIa) to the recurring unit represented by formula (IIIb) [recurring unit represented by formula (IIIa)/recurring unit represented by formula (IIIb)] was 50/50, and that a number average molecular weight of the polymer O was 270000.

A filament could be produced by using the polymer O in the same manner as in Example 1. From this result, it can be seen that a fiber can be easily produced by using the polymer O as a molten spinning liquid.

### Example 15

A mixed solution was prepared by mixing 0.20 moles of itaconic acid, 0.20 moles of hexamethylenediamine (1,6-hexanediamine) and 1 mole of 12-aminododecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer P). From the results of determination of nuclear magnetic resonance (¹H-NMR) spectrum and infrared absorption spectrum of the polymer P, it was found that the polymer P was a polymer having a recurring unit represented by formula (IIIa) wherein R¹ was hexamethylene group, and a recurring unit represented by formula (IIIb) wherein R² was undecyl group, that a molar ratio of the recurring unit represented by formula (IIIa) to the recurring unit represented by formula (IIIb) [recurring unit represented by formula (IIIa)/recurring unit represented by formula (IIIb)] was 17/83, and that a number average molecular weight of the polymer P was 274000.

A filament could be produced by using the polymer P in the same manner as in Example 1. From this result, it can be seen that a fiber can be easily produced by using the polymer P as a molten spinning liquid.

### Example 16

A mixed solution was prepared by mixing 1 mole of itaconic acid, 1 mole of 1,10-decanediamine and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer Q). From the results of determination of nuclear magnetic resonance (¹H-NMR) spectrum and infrared absorption spectrum of the polymer Q, it was found that the polymer Q was a polymer having a recurring unit represented by formula (IIIa) wherein R¹ was decyl group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 50/50, and that a number average molecular weight of the polymer Q was 272000.

A filament could be produced by using the polymer Q in the same manner as in Example 1. From this result, it can be seen that a fiber can be easily produced by using the polymer Q as a molten spinning liquid.

### Example 17

A mixed solution was prepared by mixing 1 mole of itaconic acid, 1 mole of 1,11-undecanediamine and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer R). From the results of determination of nuclear magnetic resonance (¹H-NMR) spectrum and infrared absorption spectrum of the polymer R, it was found that the polymer R was a polymer having a recurring unit represented by formula (IIIa) wherein R¹ was undecyl group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 50/50, and that a number average molecular weight of the polymer R was 274000.

A filament could be produced by using the polymer R in the same manner as in Example 1. From this result, it can be seen that a fiber can be easily produced by using the polymer R as a molten spinning liquid.

### Example 18

A mixed solution was prepared by mixing 1 mole of itaconic acid, 1 mole of 1,12-dodecanediamine and 1 mole of 11-aminoundecanoic acid, dissolving the resulting mixture in 200 mL of ethanol to give a solution, and carrying out a reaction of the solution at a liquid temperature of 60 °C for 4 hours under stirring to give a mixed solution.

The mixed solution obtained in the above was cooled to 25 °C, to precipitate a white solid reaction product. The mixed solution was filtrated to collect the reaction product. The reaction product was washed with ethanol of about 10 °C, and thereafter dried with a vacuum dryer at 40 °C for 12 hours.

Next, 20 g of the reaction product obtained in the above was mixed with 0.2 g of sodium dihydrogen phosphate as a catalyst for 1 hour in nitrogen gas atmosphere, and the resulting mixture was heated at 250 °C for 5 hours under stirring while the reaction atmosphere was depressurized to polymerize the reaction product, to give a polyamide-based polymer (hereinafter referred to as polymer S). From the results of determination of nuclear magnetic resonance (¹H-NMR) spectrum and infrared absorption spectrum of the polymer S, it was found that the polymer S was a polymer having a recurring unit represented by formula (IIIa) wherein R¹ was dodecyl group, and a recurring unit represented by formula (IIIb) wherein R² was decyl group, that a molar ratio of the recurring unit represented by formula (IIIa) to the recurring unit represented by formula (IIIb) [recurring unit represented by formula (IIIa)/recurring unit represented by formula (IIIb)] was 50/50, and that a number average molecular weight of the polymer S was 276000.

Next, as the physical properties of the polymers Q to S obtained in the above, a 5% weight loss temperature, a 10% weight loss temperature, a glass transition temperature, a melting point, a tensile strength, an elongation at break (elongation percentage (%) to original length) and Young's modulus were examined. The results are shown in Table 2.

**TABLE 2**

| Kind of polyamide-based polymer | Physical properties of polyamide-based polymer | | | | | | |
|---|---|---|---|---|---|---|---|
| | 5% Weight loss temperature (°C) | 10% Weight loss temperature (°C) | Glass transition temperature (°C) | Melting point (°C) | Tensile strength (MPa) | Elongation at break (%) | Young's modulus (MPa) |
| Polymer Q | 402 | 421 | 50 | 152 | 105 | 67 | 198 |
| Polymer R | 401 | 424 | 49 | 156 | 116 | 70 | 206 |
| Polymer S | 402 | 428 | 49 | 154 | 120 | 72 | 207 |

From the results shown in Table 2, it can be seen that the polyamide-based polymers Q to S are excellent in heat resistance since each of the polyamide-based polymers Q to S has a 5% weight loss temperature of 400 °C or higher and a 10% weight loss temperature of 420 °C or higher.

In addition, it can be seen that the polyamide-based polymers Q to S are excellent in extensibility since each of the polyamide-based polymers Q to S has Young's modulus within a range of 190 to 210 MPa and an elongation at break of 65% or more.

A filament could be produced by using the polymers Q to S obtained in the above in the same manner as in Example 1. From this result, it can be seen that a fiber can be easily produced by using the polymers Q to S as a molten spinning liquid.

Next, solubility of 1mg of the polyamide-based polymer obtained in each working example in 1 mL of an organic solvent at 50 °C was examined. As a result, the polyamide-based polymer obtained in each working example was soluble in organic solvents such as dimethyl sulfoxide, N,N-dimethylformamide and trifluoroacetic acid, and it was confirmed that the obtained solution could be used as a spinning solution.

In addition, a glass plate was flow coated with the organic solvent solution of the polyamide-based polymer obtained in each working example. As a result, a film could be formed. From this result, it can be seen that the polyamide-based polymer obtained in each working example can be used as a molding material for producing a molded product such as a film.

Next, 0.5 g of the polyamide-based polymer obtained in each working example was weighed. The polyamide-based polymer was added to 100 mL of a solution (water temperature: 25 °C), wherein the solution was 10% hydrochloric acid, 10% hydrochloric acid containing 0.5 % by mass of pepsin, 10% hydrochloric acid containing 0.7 % by mass of pepsin, 10% hydrochloric acid containing 0.9 % by mass of pepsin, 10% hydrochloric acid containing 1.0 % by mass of pepsin or an aqueous solution of pepsin containing 0.5 % by mass of pepsin, and the resulting mixture was stirred for 3 minutes. Thereafter, appearance of each solution was observed with naked eyes. As a result, it was confirmed that the polyamide-based polymer obtained in each working example became a viscous liquid in hydrochloric acid, that the polyamide-based polymer was completely dissolved in hydrochloric acid containing pepsin, and that the polyamide-based polymer became cloudy in water containing pepsin.

From these results, it can be seen that the polyamide-based polymer obtained in each working example is excellent in decomposability in water, because the polyamide-based polymer can be easily decomposed in a short period of time by an enzyme such as pepsin.

### INDUSTRIAL APPLICABILITY

The polyamide-based polymer according to the present invention can be used for fishing gears such as a fishing net and a fishing line, agricultural implements, and the like as a substitute for conventional nylon, since the polyamide-based polymer according to the present invention has degradability in water, extensibility and toughness. Also, the polyamide-based polymer is expected to contribute to weight reduction of automobiles, and improvement of fuel economy when the polyamide-based polymer is applied to automobile components, because the polyamide-based polymer can be used as a high-performance polyamide-based polymer.

In addition, the polyamide-based polymer according to the present invention has degradability in water, extensibility and toughness. Accordingly, the polyamide-based polymer is expected to be used for developing applications to fibers such as sutures used in operating animals including humans.

## Claims

1. A polyamide-based polymer of a dicarboxylic acid, a diamine and an aminoalkylcarboxylic acid, wherein itaconic acid is used as the dicarboxylic acid; a diamine represented by formula (I):
H₂N-R¹-NH₂ (I)
wherein R¹ is an alkylene group having 4 to 12 carbon atoms,
is used as the diamine; and an aminoalkylcarboxylic acid represented by formula (II):
HOOC-R²-NH₂ (II)
wherein R² is an alkylene group having 8 to 12 carbon atoms,
is used as the aminoalkylcarboxylic acid.

2. A method for producing the polyamide-based polymer of a dicarboxylic acid, a diamine and an aminoalkylcarboxylic acid, which includes
using itaconic acid as the dicarboxylic acid; a diamine represented by formula (I):
H₂N-R¹-NH₂ (I)
wherein R¹ is an alkylene group having 4 to 12 carbon atoms,
as the diamine; and an aminoalkylcarboxylic acid represented by formula (II):
HOOC-R²-NH₂ (II)
wherein R² is an alkylene group having 8 to 12 carbon atoms,
as the aminoalkylcarboxylic acid;
carrying out a reaction of itaconic acid with the diamine represented by formula (I) and the aminoalkylcarboxylic acid represented by formula (II); and
carrying out a polymerization of the resulting reaction product.

3. A polyamide-based fiber comprising the polyamide-based polymer as claimed in claim 1.

4. A molding material comprising the polyamide-based polymer as claimed in claim 1.
